(19) Europäisches Patentamt / European Patent Office / Office européen des brevets

(11) **EP 4 650 477 A1**

(12) **EUROPEAN PATENT APPLICATION**
published in accordance with Art. 153(4) EPC

(43) Date of publication:
**19.11.2025 Bulletin 2025/47**

(21) Application number: **24741589.6**

(22) Date of filing: **12.01.2024**

(51) International Patent Classification (IPC):
*C22C 38/00* (2006.01)   *C21D 9/46* (2006.01)
*C22C 38/58* (2006.01)   *C22C 18/00* (2006.01)
*C22C 18/04* (2006.01)

(52) Cooperative Patent Classification (CPC):
**C21D 9/46; C22C 38/00; C22C 38/58;** C22C 18/00;
C22C 18/04

(86) International application number:
**PCT/JP2024/000591**

(87) International publication number:
**WO 2024/150817 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023 JP 2023003886**

(71) Applicant: NIPPON STEEL CORPORATION
Chiyoda-ku
**Tokyo 100-8071 (JP)**

(72) Inventors:
• **FURUKAWA, Noriyuki**
 **Tokyo 100-8071 (JP)**
• **MITSUNOBU, Takuya**
 **Tokyo 100-8071 (JP)**
• **OKE, Takashi**
 **Tokyo 100-8071 (JP)**
• **TSUJIMURA, Takao**
 **Tokyo 100-8071 (JP)**

(74) Representative: **Vossius & Partner
Patentanwälte Rechtsanwälte mbB
Siebertstrasse 3
81675 München (DE)**

(54) **STEEL SHEET AND PLATED STEEL SHEET**

(57) The present invention has as its object the provision of steel sheet and plated steel sheet having high LME resistance. The steel sheet and plated steel sheet of the present invention have predetermined chemical compositions wherein in a depth direction from the steel sheet surface, the depth with a C concentration measured by GDS of 0.01% or less is 3 $\mu$m or more, in a depth direction from the steel sheet surface, a thickness of the layer with an area ratio of cementite of 10% or less is 8 $\mu$m or more, and a surface roughness of the steel sheet is an arithmetic average roughness Ra of more than 3.0 $\mu$m.

Fig. 1

## Description

FIELD

The present invention relates to steel sheet and plated steel sheet. More specifically, the present invention relates to steel sheet and plated steel sheet having high LME resistance.

BACKGROUND

In recent years, the steel sheet used in automobiles, household electric appliances, building materials, and various other fields has been made increasingly higher in strength. For example, in the automotive field, high strength steel sheet has been increasingly used for the purpose of lightening the weight of car bodies so as to improve fuel economy.
In welding steel sheet giving a Zn-based plating, in particular high strength steel sheet, for example as described in PTL 1, sometimes the drop in weldability due to liquid metal embrittlement (LME) cracking becomes a problem. LME cracking is believed to occur due to the surface layer part of steel sheet transforming to austenite at the time of welding, the molten zinc penetrating the grain boundaries causing the steel sheet to become brittle, and further tensile stress acting on the steel sheet at the time of welding.
Note that, PTL 2 discloses, as steel sheet suppressed in LME cracking and improved in weldability, steel sheet having at its surface layer part particle size 20 nm or more Si oxide particles in a 3000 to 6000/mm$^2$ number density present in a suitable particle size distribution.

[CITATION LIST]

[PATENT LITERATURE]

[PTL 1] WO2019/116531
[PTL 2] WO2020/218575

SUMMARY

[TECHNICAL PROBLEM]

To prevent LME cracking, it is effective to keep the Zn etc. contained in the plating layer from penetrating the steel sheet structure transformed to austenite.
The present invention, in consideration of such a situation, has as its object the provision of steel sheet and plated steel sheet having a high LME resistance.

[SOLUTION TO PROBLEM]

The inventors engaged in intensive studies on means for solving the above problem. As a result, they discovered that by firing an abrasive at the steel sheet before annealing under suitable conditions, it is possible to impart strain and obtain a suitable surface state, that by performing high dew point annealing, the steel sheet surface layer is decarburized and a layer with a low cementite fraction is formed, and as a result, it becomes possible to suppress LME.
The present invention is a result of further studies conducted based on the above findings and has as its gist the following:

(1) A steel sheet having a tensile strength of 780 MPa or more, wherein the chemical composition comprises, by mass%, C: 0.08 to 0.40%, Si: 0.4 to 2.0%, Mn: 0.1 to 5.0%, sol. Al: 0 to 2.0%, P: 0.0300% or less, S: 0.0300% or less, N: 0.0100% or less, B: 0 to 0.0100%, Ti: 0 to 0.1500%, Nb: 0 to 0.150%, V: 0 to 0.150%, Cr: 0 to 2.0%, Ni: 0 to 2.00%, Cu: 0 to 2.0000%, Mo: 0 to 1.00%, W: 0 to 1.000%, Ca: 0 to 0.1000%, Mg: 0 to 0.100%, Zr: 0 to 0.100%, Hf: 0 to 0.100%, and REM: 0 to 0.1000% and a balance of Fe and impurities, in a depth direction from the steel sheet surface, the depth with a C concentration measured by GDS of 0.01% or less is 3 μm or more, in a depth direction from the steel sheet surface, a thickness of the layer with an area ratio of cementite of 10% or less is 8 μm or more, and a surface roughness of the steel sheet is an arithmetic average roughness Ra of more than 3.0 μm.
(2) The steel sheet of the above (1) wherein a total value of contents of Si and sol. Al is less than 1.8%.
(3) The steel sheet of the above (1) wherein, in a depth direction from the steel sheet surface, the depth with a C concentration measured by GDS of 0.01% or less is 5 μm or more.

(4) The steel sheet of the above (1) wherein, in a depth direction from the steel sheet surface, the depth with a C concentration measured by GDS of 0.01 % or less is 7 μm or more.

(5) The steel sheet of the above (1) wherein a surface roughness of the steel sheet is an arithmetic average roughness Ra of 4.0 μm or more.

(6) A plated steel sheet comprising a steel sheet of any of the above (1) to (5) and a plating layer containing Zn at least at part of the surface of the steel sheet.

[ADVANTAGEOUS EFFECTS OF INVENTION]

According to the present invention, it is possible to obtain steel sheet and plated steel sheet having a high LME resistance.

BRIEF DESCRIPTION OF DRAWINGS

FIG. 1 is a view showing a layer formed at a surface layer of the steel sheet of the present invention.
FIG. 2 is a view explaining a method of evaluation of the LME resistance in the examples.

DESCRIPTION OF EMBODIMENTS

Below, the present invention will be explained. The present invention is not limited to the following embodiments. First, in the steel sheet of the present invention, the configuration for improving the LME resistance will be explained in brief.

If spot welding plated steel sheet, the plating melts and the surface layer of the steel sheet is heated whereby the steel sheet surface transforms to austenite. At that time, the molten plating penetrates the steel sheet structure along the grain boundaries of the austenite and the crystal grain boundaries become brittle. For this reason, if stress is applied to the steel sheet, LME cracking easily occurs at the crystal grain boundaries. In particular, if tensile stress is applied to the steel sheet at the time of welding, LME is believed to easily occur. The steel sheet of the present invention is improved in LME resistance by the structure formed at the surface layer of the steel sheet. Note that, in this Description, the "surface layer of the steel sheet" means the range from the surface-most position of the steel sheet to a depth of 100 μm.

If the C element is contained in the steel sheet surface layer, LME cracking easily occurs, therefore keeping the C concentration of the steel sheet surface layer low is effective for preventing LME cracking. Normally, if heating steel sheet like with annealing, external oxidation occurs and oxides (scale) are formed at the steel sheet surface, therefore decarburization becomes difficult. For this reason, the C concentration at the steel sheet surface layer is difficult to reduce. On the other hand, at the steel sheet of the present invention, in the depth direction from the steel sheet surface, the depth at which the C concentration measured by GDS is 0.01% or less is 3 μm or more. This means that at the surface layer of the steel sheet, the concentration of C, an element which easily causes LME, is low.

However, even if the C concentration at the steel sheet surface layer is low, if C remains as carbides (cementite), the molten plating penetrates the inside of the steel sheet along the grain boundaries of cementite and is liable to become the starting point of LME cracking. For this reason, if the C at the steel sheet surface layer is present as cementite, it is believed that this is liable to lead to a drop in the LME resistance. Therefore, in the steel sheet of the present invention, the thickness of the layer with an area ratio of cementite of 10% or less in the depth direction from steel sheet surface is 8 μm or more. That is, the steel sheet of the present invention is controlled in the form of the C at the surface layer so as to improve the LME resistance.

In this way, the fact that to lower the area ratio of the cementite at the surface layer, control of the dew point at the time of annealing in addition to imparting strong strain to the surface layer of the steel sheet for annealing is important was discovered by the inventors. In the present invention, imparting predetermined surface roughness to the surface of the steel sheet and imparting strong strain to the surface layer can promote diffusion of oxygen to the inside of the steel sheet and lower the C concentration at the surface layer of the steel sheet. Further, the fact that making the C concentration of the surface layer of the steel sheet and the area ratio of the cementite as explained above enables the LME resistance to be improved was discovered by the inventors and led to the completion of the present invention.

Below, the present invention will be explained in detail.

First, the chemical composition of the steel sheet will be explained. Below, the "%" relating to the chemical composition shall mean "mass%". Further, in the numerical ranges in the chemical constituents, numerical ranges expressed using "to" mean ranges including the numerical values described before and after the "to" as lower limit values and upper limit values.

(C: 0.08 to 0.40%)

C (carbon) is an element securing the strength of steel. To obtain the 780 MPa or more tensile strength covered by the present invention, considering the balance with the weldability and preventing the C concentration of the surface layer of the steel sheet from becoming too high, the content of C is 0.08 to 0.40%. If the content of C is too high, even if applying the later explained high dew point annealing, the C concentration of the surface layer and the cementite fraction no longer are lowered. The content of C may also be 0.10% or more, 0.12% or more, or 0.15% or more. The content of C may also be 0.35% or less, 0.30% or less, or 0.25% or less.

(Si: 0.4 to 2.0%)

Si (silicon) is an element promoting ferrite stabilization and decarburization. By Si being contained, due to the later explained pretreatment and heat treatment, decarburization at the surface layer part proceeds and ferrite at the surface layer part stabilizes, whereby the LME resistance is improved. To obtain this effect, the content of Si is 0.4 to 2.0%. If the content of Si is too high, even if applying high dew point annealing, external oxidation proceeds, the surface layer of the steel sheet is formed with oxides (scale), and conversely decarburization of the surface-most part is suppressed and the effect of improvement of the LME resistance becomes smaller. The content of Si may also be 0.5% or more, 0.6% or more, 0.7% or more, or 0.8% or more. The content of Si may also be 1.8% or less, 1.6% or less, 1.4% or less, or 1.2% or less.

(Sol. Al: 0 to 2.0%)

Al (aluminum) is an element forming a solid solution in the steel and thereby, like Si, promoting ferrite stabilization and decarburization. "sol. Al" means acid soluble Al not forming $Al_2O_3$ or other oxides and able to dissolve in acid and is found as the Al measured in the process of analysis of Al when excluding insoluble residue on the filter paper. In the steel sheet of the present invention, the role of sol. Al can also be obtained by inclusion of Si, therefore sol. Al is not essential. The lower limit of the content of sol. Al is 0. From the viewpoint of the LME resistance, therefore the content of sol. Al is 2.0% or less. The content of sol. Al may also be 0.1% or more, 0.2% or more, or 0.3% or more. The content of sol. Al may also be 1.5% or less, 1.2% or less, or 1.0% or less.

Note that, Si and Al are also elements causing a drop in the LME resistance, therefore the total value of contents of Si and sol. Al is preferably less than 1.8%. The total of the contents of Si and sol. Al may also be less than 1.7% or less than 1.6%.

(Mn: 0.1 to 5.0%)

Mn (manganese) is an element forming hard structures and therefore is effective for improving the strength of the steel. Considering the balance of the strength of the steel and the drop in formability due to Mn segregation, the content of Mn is 0.1 to 5.0%. The content of Mn may also be 0.5% or more, 1.0% or more, or 1.5% or more. The content of Mn may also be 4.5% or less, 4.0% or less, or 3.5% or less.

(P: 0.0300% or Less)

P (phosphorus) is an impurity generally contained in steel. If the content of P is more than 0.0300%, the weldability is liable to fall. Therefore, the content of P is 0.0300% or less. The content of P may also be 0.0200% or less, 0.0100% or less, or 0.0050% or less. P is preferably not contained. The lower limit of the content of P is 0%. From the viewpoint of the dephosphorization costs, the content of P may also be more than 0%, 0.0001% or more, or 0.0005% or more.

(S: 0.0300% or Less)

S (sulfur) is an impurity generally contained in steel. If the content of S is more than 0.0300%, the weldability is liable to fall and, further, the amount of precipitation of MnS is liable to increase and the bendability and other formability are liable to fall. Therefore, the content of S is 0.0300% or less. The content of S may also be 0.0100% or less, 0.0050% or less, or 0.0020% or less. S is preferably not contained. The lower limit of the content of S is 0%. From the viewpoint of the desulfurization costs, the content of S may also be more than 0%, 0.0001% or more, or 0.0005% or more.

(N: 0.0100% or Less)

N (nitrogen) is an impurity generally contained in steel. If the content of N is more than 0.0100%, the weldability is liable to fall. Therefore, the content of N is 0.0100% or less. The content of N may also be 0.0080% or less, 0.0050% or less, or 0.0030% or less. N is preferably not contained. The lower limit of the content of N is 0%. From the viewpoint of production costs, the content of N may also be more than 0%, 0.0001% or more, 0.0005% or more, or 0.0010% or more.

(B: 0 to 0.0100%)

B (boron) is an element raising the hardenability and contributing to improvement of the strength and segregating at the grain boundaries to strengthen the grain boundaries and improve toughness, therefore may be included in accordance with need. It is not an essential element, therefore the lower limit of the content of B is 0%. The effect is obtained even with inclusion in a trace amount. The content of B if included is preferably 0.0001% or more. The content of B may also be 0.0002% or more or 0.0003% or more. On the other hand, from the viewpoint of securing sufficient toughness, the content of B is 0.0100% or less. The content of B may also be 0.0080% or less, 0.0060% or less, or 0.0020% or less.

(Ti: 0 to 0.1500%)

Ti (titanium) is an element precipitating as TiC during cooling of steel and contributing to improvement of strength, therefore may be included in accordance with need. It is not an essential element, therefore the lower limit of the content of Ti is 0%. The effect is obtained even with inclusion in a trace amount. The content of Ti is preferably 0.0001% or more. The content of Ti may also be 0.0003% or more or 0.0005% or more. On the other hand, if excessively contained, coarse TiN is liable to be formed and the toughness is liable to be reduced, therefore the content of Ti may also be 0.1500% or less, 0.1000% or less, 0.0500% or less, 0.0050% or less, or 0.0020% or less.

(Nb: 0 to 0.150%)

Nb (niobium) is an element contributing to improvement of strength through improvement of hardenability therefore may be included in accordance with need. It is not an essential element, therefore the lower limit of the content of Nb is 0%. The effect is obtained even with inclusion in a trace amount. The content of Nb if included is preferably 0.001% or more. The content of Nb may also be 0.003% or more, 0.005% or more, or 0.008% or more. On the other hand, from the viewpoint of securing sufficient toughness, the content of Nb is 0.150% or less. The content of Nb may also be 0.100% or less, 0.060% or less, or 0.020% or less.

(V: 0 to 0.150%)

V (vanadium) is an element contributing to improvement of strength through improvement of hardenability therefore may be included in accordance with need. It is not an essential element, therefore the lower limit of the content of V is 0%. The effect is obtained even with inclusion in a trace amount. The content of V if included is preferably 0.001% or more. The content of V may also be 0.003% or more, 0.005% or more, or 0.008% or more. On the other hand, from the viewpoint of securing sufficient toughness, the content of V is 0.150% or less. The content of V may also be 0.100% or less, 0.060% or less, or 0.020% or less.

(Cr: 0 to 2.00%)

Cr (chromium) is effective for raising the hardenability to raise the strength of the steel, therefore may be included in accordance with need. It is not an essential element, therefore the lower limit of the content of Cr is 0%. The effect is obtained even with inclusion in a trace amount. The content of Cr if included is preferably 0.001% or more. The content of Cr may also be 0.01% or more, 0.05% or more, or 0.10% or more. On the other hand, if excessively contained, Cr carbides are formed in large amounts and conversely the quenchability is liable to be impaired, therefore the content of Cr is 2.00% or less. The content of Cr may also be 1.80% or less, 1.50% or less, 0.50% or less, or 0.20% or less.

(Ni: 0 to 2.00%)

Ni (nickel) is effective for raising the hardenability to raise the strength of the steel, therefore may be included in accordance with need. It is not an essential element, therefore the lower limit of the content of Ni is 0%. The effect is obtained even with inclusion in a trace amount. The content of Ni if included is preferably 0.001 % or more. The content of Ni may also be 0.01% or more, 0.02% or more, or 0.05% or more. On the other hand, excessive addition of Ni causes a rise in cost, therefore the content of Ni is 2.00% or less. The content of Ni may also be 1.80% or less, 1.50% or less, 0.50% or less, or 0.20% or less.

(Cu: 0 to 2.0000%)

Cu (copper) is effective for raising the hardenability to raise the strength of the steel, therefore may be included in accordance with need. It is not an essential element, therefore the lower limit of the content of Cu is 0%. The effect is obtained even with inclusion in a trace amount. The content of Cu if included is preferably 0.0001% or more. The content of Cu may also be 0.0002% or more or 0.0005% or more. On the other hand, from the viewpoint of suppressing a drop of toughness or cracking of a slab after casting or a drop in weldability, the content of Cu is 2.0000% or less. The content of Cu may also be 1.8000% or less, 1.5000% or less, 0.0050% or less, or 0.0020% or less.

(Mo: 0 to 1.00%)

Mo (molybdenum) is effective for raising the hardenability to raise the strength of the steel, therefore may be included in accordance with need. It is not an essential element, therefore the lower limit of the content of Mo is 0%. The effect is obtained even with inclusion in a trace amount. The content of Mo if included is preferably 0.001% or more. The content of Mo may also be 0.01% or more, 0.02% or more, or 0.03% or more. On the other hand, from the viewpoint of suppressing a drop in toughness, the content of Mo is 1.00% or less. The content of Mo may also be 0.80% or less, 0.60% or less, or 0.20% or less.

(W: 0 to 1.000%)

W (tungsten) is effective for raising the hardenability to raise the strength of the steel, therefore may be included in accordance with need. It is not an essential element, therefore the lower limit of the content of W is 0%. The effect is obtained even with inclusion in a trace amount. The content of W if included is preferably 0.001% or more. The content of W may also be 0.002% or more or 0.003% or more. On the other hand, from the viewpoint of suppression of a drop in toughness, the content of W is 1.000% or less. The content of W may also be 0.800% or less, 0.600% or less, 0.300% or less, 0.100% or less, or 0.020% or less.

(Ca: 0 to 0.1000%)

Ca (calcium) is an element contributing to control of inclusions, in particular the fine dispersion of inclusions and having the action of raising the toughness, therefore may be included in accordance with need. It is not an essential element, therefore the lower limit of the content of Ca is 0%. The effect is obtained even with inclusion in a trace amount. The content of Ca if included is preferably 0.0001 % or more. The content of Ca may also be 0.0002% or more or 0.0003% or more. On the other hand, if excessively contained, deterioration of the surface properties sometimes surfaces, therefore the content of Ca is 0.1000% or less. The content of Ca may also be 0.0800% or less, 0.0500% or less, 0.0300% or less, 0.0100% or less, or 0.0010% or less.

(Mg: 0 to 0.100%)

Mg (magnesium) is an element having the action of contributing to control of inclusions, in particular fine dispersion of the inclusions and raising the toughness, therefore may be included in accordance with need. It is not an essential element, therefore the lower limit of the content of Mg is 0%. The effect is obtained even with inclusion in a trace amount, but the content of Mg if included is preferably 0.0001% or more. The content of Mg may also be 0.0005% or more or 0.0008% or more. On the other hand, if excessively contained, deterioration of the surface properties sometimes surfaces, therefore the content of Mg may also be 0.100% or less, 0.090% or less, 0.080% or less, 0.030% or less, 0.010% or less, or 0.002% or less.

(Zr: 0 to 0.100%)

Zr (zirconium) is an element having the action of contributing to control of inclusions, in particular fine dispersion of the inclusions and raising the toughness, therefore may be included in accordance with need. It is not an essential element, therefore the lower limit of the content of Zr is 0%. The effect is obtained even with inclusion in a trace amount. The content of Zr if included is preferably 0.001% or more. The content of Zr may also be 0.005% or more or 0.010% or more. On the other hand, if excessively contained, deterioration of the surface properties sometimes surfaces, therefore the content of Zr is 0.100% or less. The content of Zr may also be 0.050% or less or 0.030% or less.

(Hf: 0 to 0.100%)

Hf (hafnium) is an element having the action of contributing to control of inclusions, in particular fine dispersion of the inclusions and raising the toughness, therefore may be included in accordance with need. It is not an essential element, therefore the lower limit of the content of Hf is 0%. The effect is obtained even with inclusion in a trace amount. The content of Hf if included is preferably 0.0001% or more. The content of Hf may also be 0.0003% or more or 0.0005% or more. On the other hand, if excessively contained, deterioration of the surface properties sometimes surfaces, therefore the content of Hf is 0.100% or less. The content of Hf may also be 0.050% or less, 0.030% or less, 0.010% or less, 0.005% or less, or 0.002% or less.

(REM: 0 to 0.1000%)

An REM (rare earth metal) is an element having the action of contributing to control of inclusions, in particular fine dispersion of the inclusions and raising the toughness, therefore may be included in accordance with need. It is not an essential element, therefore the lower limit of the content of an REM is 0%. The effect is obtained even with inclusion in a trace amount. The content of REM if included is preferably 0.0001% or more. The content of REM may also be 0.0003% or more or 0.0005% or more. On the other hand, if excessively contained, deterioration of the surface properties sometimes surfaces, therefore the content of an REM is 0.1000% or less. The content of an REM may also be 0.0500% or less, 0.0300% or less, 0.0100% or less, 0.0050% or less, or 0.0020% or less. Note that, REM an abbreviation of "rare earth metal" and means elements belonging to the lanthanides. An REM is usually added as a misch metal.

In the steel sheet according to the present invention, the balance besides the above chemical composition is comprised of Fe and impurities. Here, the "impurities" are constituents entering due to the ore, scrap, or other raw materials and other various factors in the production process when industrially producing steel sheet and not having a detrimental effect on the LME resistance and hydrogen embrittlement resistance of the steel sheet according to the present invention. That is, it means something contained in a range enabling the LME resistance sought by the steel sheet of the present invention to be obtained.

The chemical composition of the steel sheet may be analyzed using an elemental analysis method known to persons skilled in the art. For example, it is analyzed by inductively coupled plasma-mass spectrometry (ICP-MS method). However, C and S may be measured using the combustion-infrared absorption method, while N can be measured using the inert gas melting-thermal conductivity method. These analyses may be performed on a sample taken from the steel sheet by a method based on JIS G0417: 1999.

Next, the surface layer part of the steel sheet will be explained.

[C Concentration]

In the steel sheet of the present invention, in the depth direction from the steel sheet surface, the depth where the C concentration measured by GDS (glow discharge spectrometry) is 0.01% or less is 3 $\mu$m or more.

The sensitivity to LME becomes lower if the C concentration becomes lower, therefore if the C concentration of the surface layer is low, the LME resistance is improved. Further, C is an element stabilizing austenite, therefore by this being low, the layer with a low LME sensitivity, explained later, stabilizes. Further, if the C of the surface layer is small, hydrogen penetrating the steel easily escapes and the hydrogen desorption property is improved. This is guessed to be because there is little presence of C, an interstitial element, in the ferrite layer, therefore hydrogen easily passes through. As a result, the hydrogen embrittlement resistance is improved.

Such a surface layer structure can be obtained by making the chemical composition of the steel sheet the one explained above and performing the later explained pretreatment and heat treatment.

If the depth at which the C concentration is 0.01% or less is 3 $\mu$m or more, the effect of improvement of the LME resistance is obtained, therefore the upper limit of the depth is not limited. The depth at which the C concentration is 0.01% or less may also, for example, be 50 $\mu$m or less, 40 $\mu$m or less, or 30 $\mu$m or less. The depth at which the C concentration is 0.01% or less may also, for example, be 5 $\mu$m or more, 7 $\mu$m or more, 10 $\mu$m or more, 15 $\mu$m or more, or 20 $\mu$m or more.

The C concentration is measured by GDS five times in the sheet thickness direction while changing the position of the surface of the high strength steel sheet. The measurement conditions are made the following. The starting point of the "depth" is the surface of the steel sheet in steel sheet which has not been plated and the interface of the steel sheet and plating layer in steel sheet which has been plated. The interface of the steel sheet and the plating layer is made the position where the concentration of Fe measured by GDS measurement becomes 93% of the concentration of Fe at the depth of 150 $\mu$m.

Position: high frequency glow discharge optical emission spectrometry (made by LECO Japan Corporation, Model No. "GDS850A"
Ar gas pressure: 0.3 MPa
Anode size: 4 mmφ
RF output: 30W
Measurement time: 200 to 1500 seconds

[Low Cementite Layer]

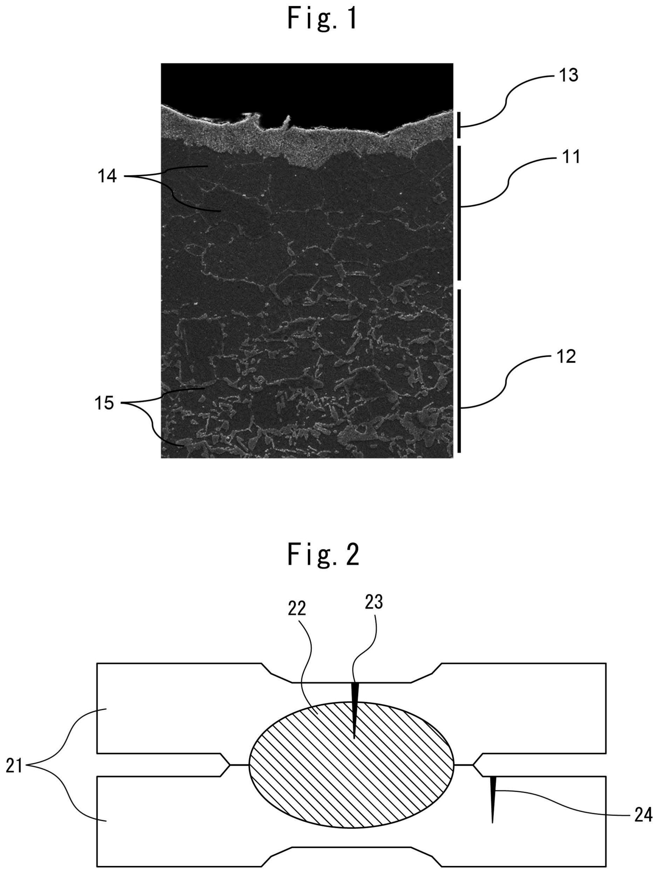

In the steel sheet of the present invention, in the depth direction from the steel sheet surface, the thickness of the layer with an area ratio of cementite of 10% or less (below, referred to as the "low cementite layer") is 8 μm or more. FIG. 1 shows one example of a structural photograph by an SEM capturing the vicinity of the surface layer of the steel sheet of the present invention by a power of 1000X. FIG 1 is a cross-section parallel to the thickness direction of the steel sheet. The top side of the figure is the front surface of the steel sheet. The plating layer 13 and its surface are shown. The steel sheet surface layer has a low cementite layer 11 comprised of a layer which is low in C concentration, is mainly comprised of ferrite 14, and has an area ratio of cementite 15 of 10% or less. At the inside of the steel sheet from the low cementite layer 11 (bottom side of drawing), there are hard structures 12 including a relatively large amount of cementite 15. The layer at the surface side of the low cementite layer 11 (top side in the drawing) with the relatively high brightness (bright layer) is the plating layer 13. The ferrite and the cementite can be judged by the difference in brightness at the SEM image. When classifying the steel sheet part of FIG. 1 into parts with a relatively high brightness (bright parts) and parts with a relatively low brightness (dark parts), the parts with relatively high brightness can be judged to be cementite. The parts with relatively low brightness can be judged to be ferrite.

Cementite easily segregates at the grain boundaries, therefore if cementite increases, the molten plating penetrates the grain boundaries and LME easily occurs. Therefore, by making the low cementite layer thickly present, even if the plating melts, LME hardly occurs and the LME resistance can be improved. Such a surface layer structure can be obtained by making the chemical composition of the steel sheet one as explained above and performing the later explained pretreatment and heat treatment.

If the thickness of the low cementite layer is 8 μm or more, the effect of improvement of the LME resistance is obtained, therefore the upper limit of the thickness is not particularly prescribed. The thickness of the low cementite layer may also be, for example, 50 μm or less, 40 μm or less, or 30 μm or less. The thickness of the low cementite layer may be 10 μm or more or 20 μm or more.

The structure other than the cementite of the low cementite layer is not limited. For example, it may be made one or more of any of martensite, bainite, and ferrite. Ferrite is low in LME sensitivity, so being a structure mainly comprised of ferrite is preferable from the viewpoint of the improvement of the LME resistance.

The thickness of the low cementite layer is found by etching by Nital the C-cross-section of the steel sheet (sheet thickness cross-section parallel to rolling direction (L-direction) and examining a 50 μm×50 μm field containing the surface layer of the steel sheet at a power of 1000X. From the state of the structure on the SEM image obtained by examination under an SEM, it is possible to differentiate between the martensite, bainite, and other hard structures contain in relatively large amounts of cementite from ferrite. The thickness of the low cementite layer in a 500 μm measurement range in the L-direction is made five ranges with intervals of 1000 μm. In the five measurement ranges, the average value of the thicknesses of the low cementite layers in the sheet thickness direction is found. Here, the "area ratio of cementite" means the area ratio sought by examining the C-cross-section. If examining locally the L-cross-section (sheet thickness cross-section perpendicular to rolling direction) in the middle of the thickness direction, even if there is a location with an area ratio of the cementite of more than 10%, if the area ratio of cementite in the cross-section at the depth down to 5 μm is 10% or less, there is no problem.

The steel sheet of the present invention can have a plating layer as explained later. If having a plating layer, the starting point of the depth with a C concentration measured by GDS of 0.01% or less and the thickness of the low cementite layer is the interface of the steel sheet and the plating layer.

[Surface Roughness]

The steel sheet of the present invention has a surface roughness of an arithmetic average roughness Ra defined by JIS B0601: 2013 of more than 3.0 μm. In the later explained pretreatment step, the roughness of the surface of the steel sheet is made larger while introducing strain. Due to this, the LME resistance is improved. Furthermore, by roughness being imparted, hydrogen easily is desorbed and the hydrogen embrittlement resistance rises. In the later explained case of having a plating layer, the "surface roughness" is the roughness of the interface of the steel sheet and plating layer. The upper limit of the surface roughness is not prescribed, but may be 20.0 μm or less, 15.0 μm or less, or 10.0 μm or less. The roughness of the interface of the steel sheet and the plating layer may be the surface roughness of the steel sheet measured after removing the plating. The plating may be removed by dissolving the plating layer in an acid solution to which an inhibitor suppressing corrosion of the steel sheet is added.

[Tensile Strength]

The present invention suppresses LME occurring at high strength steel sheet. High strength steel sheet specifically is steel sheet having a 780 MPa or more tensile strength. The upper limit of the tensile strength is not particularly prescribed, but from the viewpoint of securing toughness, may be for example 2000 MPa or less. The tensile strength is measured by obtaining a JIS No. 5 tensile test piece having a direction perpendicular to the rolling direction and sheet thickness direction as a long direction and performing a test based on JIS Z 2241: 2011. The tensile strength may also be 880 MPa or more, 980 MPa or more, 1080 MPa or more, or 1180 MPa or more. The tensile strength may also be 1900 MPa or less or 1800 MPa or less.

If the rolling direction of the steel sheet is not clear, as the method of identifying the rolling direction of the steel sheet, for example, the following method is employed. The sheet thickness cross-section of the steel sheet is polished to a mirror surface to finish it, then an electron probe micro analyzer (EPMA) is used to measure the S concentration. The measurement conditions are made an acceleration voltage of 15 kV and a measurement pitch of 1 $\mu$m. An image of distribution of a range of 500 $\mu$m square at the center part of sheet thickness is measured. At this time, a stretched region with a high S concentration is judged as an MnS or other inclusion. At the time of examination, a plurality of fields may also be examined. Next, based on the sheet thickness cross-section first examined by the above method, surfaces parallel to surfaces rotated at 5° increments in the 0° to 180° range about the sheet thickness direction are examined in cross-section by the above method. The average value of the lengths of the long axes of the plurality of inclusions at each obtained cross-section is calculated for each cross-section and the cross-section giving the largest average value of the long axes of the inclusions is identified. The direction parallel to the long axis directions of the inclusions at that cross-section is judged to be the rolling direction.

Note that, when a test piece for measurement of the tensile strength cannot be taken from the steel sheet forming a welded joint, alternatively, the hardness (Vickers hardness) of the steel sheet at a non-heat affected zone at a distance of 5 mm or more from an outside end of the nugget of the spot welded part can be measured and the value of the tensile strength may be estimated from the following correlation formula (Correlation Between Static Strength Parameters, Fumihiko Hasegawa, Junichi Arai, Tsuneshichi Tanaka,"Materials", Vol. 39, No. 442, P. 859 to 863). Here, a "heat affected zone" is a not melted part of the steel sheet at which welding heat causes a change in the structure, metallurgical properties, mechanical properties, etc. while a "non-heat affected zone" is a part other than a heat affected zone. A portion 5 mm or more separated from the outer edge of the nugget of the spot welded part may be judged to be a non-heat affected zone.

$$Hv=0.301\times TS+5.701$$

(where, Hv is the Vickers hardness and TS is the tensile strength (unit: MPa))

That is, if the hardness is 240 Hv or so or more, the tensile strength may be deemed 780 MPa or more.

<Plated Steel Sheet >

The plated steel sheet according to the present invention is comprised of the steel sheet according to the present invention explained above and a plating layer containing Zn on the same. The plating layer is formed at least part of the surface of the steel sheet. It may be formed at one side of the steel sheet or may be formed at both surfaces. The plating layer may be one treated by alloying.

[Chemical Composition of Plating Layer]

The chemical composition of the plating layer is not limit so long as containing Zn. The plating layer containing Zn may for example be Zn-0.2%Al (GI), Zn-(0.3 to 1.5)%Al, Zn-4.5%Al, Zn-0.09%Al-10%Fe (GA), Zn-1.5%Al-1.5%Mg, Zn-11%Al-3%Mg-0.2%Si, Zn-11%Ni, Zn-15%Mg, Zn-20%Al-7%Mg, or Zn-30%Al-10%Mg.

The chemical composition of the plating layer can be determined by dissolving the plating layer in an acid solution to which an inhibitor is added for suppressing corrosion of the steel sheet and measuring the obtained solution by ICP (inductively coupled plasma) emission spectrometry. The acid solution to which the inhibitor is added may for example be a 10 mass% hydrochloric acid solution to which 0.06 mass% of an inhibitor (ibit made by Asahi Chemical Corporation) is added.

The thickness of the plating layer may for example be 3 to 50 $\mu$m. Further, the amount of deposition of the plating layer is not particularly limited, but for example may be 10 to 170 g/m$^2$ per side. In the present invention, the amount of deposition of the plating layer is determined from the change in weight before and after dissolving the plating layer in an acid solution to which an inhibitor for suppressing corrosion is added and pickling and removal of the plating layer. The thickness of the plating layer may be 5 $\mu$m or more, 10 $\mu$m or more, 15 $\mu$m or more, or 20 $\mu$m or more. The thickness of the plating layer may also be 40 $\mu$m or less or 30 $\mu$m or less. The amount of deposition of the plating layer may be 20 g/m$^2$ or more, 30 g/m$^2$ or more, 40 g/m$^2$ or more, or 50 g/m$^2$ or more per side. The amount of deposition of the plating layer may also be 150 g/m$^2$ or less, 130 g/m$^2$ or less, 120 g/m$^2$ or less, or 100 g/m$^2$ or less per side.

The roughness of the interface of the steel sheet and plating layer becomes the roughness of the surface of the above steel sheet, so is an Ra of more than 3.0 $\mu$m. If considering the adhesion of the plating, Ra may be 3.5 $\mu$m or more or 4.0 $\mu$m or more. The roughness of the interface of the steel sheet and plating layer may be made the surface roughness of the steel sheet measured after dissolving away the plating.

Note that, the steel sheet of the present invention has the effect of improvement of the LME resistance even if not galvanized. In general, if spot welding steel sheets which are not galvanized, no LME cracking will ever occur unless contact with molten zinc occurs near the spot welded parts. However, if spot welding one steel sheet which has been galvanized and another steel sheet which has not been galvanized, at the time of welding, molten zinc is formed at the overlaid surfaces of the steel sheets. For this reason, there is a possibility that the molten zinc will contact the surface of the steel sheet which has not been plated and LME cracking will occur. Further, if using welding electrodes on which is deposited plating melted when spot welding a steel sheet provided with Zn plating to spot weld steel sheet which has not been plated, LME cracking sometimes occurs due to the Zn plating depositing at the welding electrodes melting and contacting the surface of the other steel sheet. If using the steel sheet of the present invention as a steel sheet which has not been plated, as explained above, even when the molten zinc can contact the surface at the time of spot welding, the C concentration of the surface layer is low and further the surface layer is a low cementite layer, LME cracking can be suppressed.

If overlaying a plurality of steel sheets and spot welding them to join them and prepare a welded joint, by using the steel sheet of the present invention as the steel sheet of the outermost layer, it is possible to suppress formation of LME cracking at the outermost layer of the welded joint. LME cracking at the outermost layer of the welded joint can occur when the steel sheet of the outermost layer is high strength steel sheet with a high C concentration and has Zn plating at the surface layer side, when molten Zn plating has deposited at the welding electrodes, etc. As LME cracking at the outermost layer of the welded joint, for example, there is cracking at the indentations made by the welding electrodes (cracking right under welding electrodes), cracking at the slanted parts formed at the peripheral edges of the indentation parts (shoulder parts) (cracking of weld shoulder parts), etc. These can be suppressed by using the steel sheet of the present invention as the steel sheet of the outermost layer.

Further, in the above-mentioned welded joint, even if at the superposed surfaces of the steel sheets (overlaid surfaces), if one steel sheet has galvanization and the other steel sheet is high strength steel sheet not having galvanization, by using the steel sheet of the present invention as that high strength steel sheet, it is possible to suppress LME cracking. As LME cracking at the overlaid surfaces, for example, there are cracking at parts near the outside of the parts where the steel sheets are pressure welded by the spot welding (cracking right outside pressure contact zone) etc. These can be suppressed by using the steel sheet of the present invention as the above-mentioned high strength steel sheet.

The thickness of the steel sheet and plated steel sheet of the present invention is not particularly limited. For example, it may be 0.6 to 3.2 mm. The sheet thickness may also be 0.8 mm or more or 1.0 mm or more. The sheet thickness may also be 3.0 mm or less, 2.6 mm or less, 2.4 mm or less, 2.2 mm or less, 2.0 mm or less, or 1.8 mm or less.

Next, the method of production of the steel sheet according to the present invention will be explained.

The steel sheet according to the present invention can, for example, be obtained by a method of production comprising a casting step of casting molten steel adjusted in chemical composition to form a steel slab, a hot rolling step of hot rolling the steel slab to obtain hot rolled steel sheet, a coiling step of coiling the hot rolled steel sheet, a cold rolling step of cold rolling the coiled hot rolled steel sheet to obtain cold rolled steel sheet, a pretreatment step of grit blasting the cold rolled steel sheet, and an annealing step of annealing the pretreated cold rolled steel sheet. Alternatively, after the hot rolling step, it is also possible to not coil up the hot rolled steel sheet but to pickle it and cold roll it as is.

[Casting Step]

The conditions of the casting step are not particularly limited. For example, after smelting by a blast furnace, electric furnace, etc., various secondary refining operations may be performed, then casting may be performed by a method such as usual continuous casting, casting by the ingot method, etc.

[Hot Rolling Step]

The steel slab obtained by casting can be hot rolled to obtain hot rolled steel sheet. The hot rolling step is performed by hot rolling the cast steel slab directly or after cooling once, then reheating. If reheating, the heating temperature of the steel slab may be, for example, 1100 to 1250°C. In the hot rolling step, usually rough rolling and finish rolling are performed. The temperatures and rolling reductions of the rolling operations may be suitably changed in accordance with the desired microstructure and sheet thickness. For example, the end temperature of the finish rolling may be 900 to 1050°C, and the reduction rate of the finish rolling may be 10 to 50%.

[Coiling Step]

The hot rolled steel sheet can be coiled at a predetermined temperature. The coiling temperature may be suitably changed in accordance with the desired microstructure etc. and for example may be 500 to 800°C. It is also possible apply predetermined heat treatment to hot rolled steel sheet before coiling or after coiling, then uncoiling. Alternatively, it is also possible to not perform coiling, but pickle the hot rolled steel sheet after the hot rolling step and then perform the later explained cold rolling.

[Cold Rolling Step]

After pickling etc. the hot rolled steel sheet, the hot rolled steel sheet can be cold rolled to obtain cold rolled steel sheet. The reduction rate of the cold rolling may be suitably changed in accordance with the desired microstructure and sheet thickness. For example, it may be 20 to 80%. After the cold rolling step, for example, the steel sheet may be air cooled to cool it down to room temperature.

[Pretreatment Step]

To obtain the structure of the surface layer of the steel sheet explained above, predetermined pretreatment is performed, then annealing has to be performed.

The pretreatment includes using an angular abrasive to grit blast the surface of the cold rolled steel sheet. The abrasive which can be used is not particularly limited, but for example it is possible to use multiangular shaped steel grit with an average particle size of 100 to 500 $\mu$m, preferably 120 to 420 $\mu$m, more preferably 180 to 350 $\mu$m. As such grit, for example, TGD-30 made by WINOA IKK JAPAN may be mentioned. Due to this, it is possible to increase the roughness of the surface while introducing strain. The blasted amount of grit may be 5 to 400 kg/m$^2$. By performing such grit blasting, in the later explained annealing step, decarburization is promoted and structure with stable ferrite can be efficiently formed at the surface layer of the steel sheet. Note that, the amount blasted per unit time/unit area on the level of 400 kg/m$^2$ is $4.0\times10^{-4}$ kg/(mm$^2$ ·min). The roughness of the surface of the steel sheet after pretreatment is preferably an Ra of more than 3.0 $\mu$m. The roughness Ra may be 3.5 $\mu$m or more or 4.0 $\mu$m or more. Note that, the surface roughness of the steel sheet after pretreatment is maintained in the steel sheet and plated steel sheet according to the present invention after the later explained annealing step and plating step (including alloying step).

[Annealing Step]

After the pretreatment step, the cold rolled steel sheet is annealed. The annealing is performed in a state applying a 1 to 20 MPa tension. If applying tension at the time of annealing, the steel sheet can be more effectively be given strain and decarburization of the surface layer is promoted.

The holding temperature of the annealing step is 750 to 900°C. The holding temperature may be 770 to 870°C. By setting such a range, decarburization is promoted, the C concentration of the surface layer is lowered, and the cementite can be reduced. The speed of temperature rise to the holding temperature is not particularly limited, but may be 1 to 10°C/s.

The holding time at the holding temperature of the annealing step is 40 to 300 seconds. The holding time may also be 50 to 250 seconds. By setting such a range, decarburization is promoted, the C concentration of the surface layer is lowered, and the cementite can be reduced.

The atmosphere of the annealing step is made the dew point-30 to 20°C. The dew point may also be -10 to 5°C. The atmosphere may, for example, be N$_2$ -1 to 10 vol%H$_2$ or N$_2$ -2 to 4 vol%H$_2$. If the dew point is too high or too low, at the outside part of the steel sheet, a layer including oxides of Si, Mn, Al, etc. is formed and decarburization is no longer promoted. Furthermore, mutual diffusion of the plating constituents and the steel constituents is obstructed and the plateability sometimes becomes insufficient.

Due to the method of production provided with the above-mentioned steps, at the surface layer of the steel sheet, decarburization is promoted and steel sheet reduced in cementite can be obtained.

<Method of Production of Plated Steel Sheet>

The plated steel sheet according to the present invention can be obtained by a method of production provided with a plating step for forming a plating layer on the steel sheet produced in the above way.

The plating step may be performed by methods known to persons skilled in the art. The plating may be performed for example by hot dipping and may be performed by electroplating. Preferably, the plating is performed by hot dipping. The conditions of the plating step may be suitably set considering the chemical composition, thickness, amount of deposition, etc. of the desired plating layer. For example, the sheet may be dipped in a 420 to 480°C hot dip galvanization bath adjusted in chemical composition for 1 to 10 seconds, pulled out after dipping by 20 to 200 mm/s, and wiped by $N_2$ gas to control the amount of plating deposition. After the plating step, known alloying may be performed to alloy the plating. The alloying may be performed at 500 to 550°C for 10 to 60 seconds.

The steel sheet and plated steel sheet according to the present invention are high in strength and have high LME resistance and hydrogen embrittlement resistance, therefore can be suitably used in automobiles, household electric appliances, building materials, and other broad fields. In particular, they are preferably used in the automobile field. Steel sheet and plated steel sheet used for automobile use are often spot welded. In that case, LME cracking can become a remarkable problem. For this reason, if using the steel sheet and plated steel sheet according to the present invention as steel sheet for automobile use, the effect of the invention of having a high LME resistance is suitably exhibited.

EXAMPLES

Below, examples will be used to explain the present invention in more detail. The present invention is not limited to these examples.

(Preparation of Steel Sheet Sample)

<Example 1>

Molten steel adjusted to the chemical composition described in No. 1 of Table 1 was smelted in a blast furnace and cast by continuous casting to obtain a steel slab. The obtained steel slab was heated to 1200°C and hot rolled with an end temperature of the finish rolling of 950°C and a reduction rate of the finish rolling of 30% to obtain hot rolled steel sheet. The obtained hot rolled steel sheet was coiled at a cooling temperature of 650°C, pickled, then cold rolled by a rolling reduction of 50% to obtain cold rolled steel sheet. The sheet thickness of the cold rolled steel sheet was made 1.6 mm.

Next, as a pretreatment step, the cold rolled steel sheet was grit blasted using a blasting material of TGD-30 made by WINOA IKK JAPAN and a blasting amount of 5 kg/m². 

After the pretreatment step and before the annealing step, the surface roughness of the steel sheet was measured based on JIS B 0601: 2013. That is, at the grit blasted surface, 10 locations were randomly selected. At each location, the surface profile was measured by a contact type surface roughness meter. The surface roughnesses at these locations were arithmetically averaged. The arithmetic average roughness Ra was evaluated in the following way.

Evaluation AA: more than 4.0 $\mu$m
Evaluation A: more than 3.0 $\mu$m and 4.0 $\mu$m or less
Evaluation B: 3.0 $\mu$m or less

After that, the steel sheet was annealed in an oxygen concentration 20 ppm or less furnace in a $N_2$ -4%$H_2$ gas atmosphere by a dew point of 0°C, holding temperature of 800°C, and holding time of 40 seconds to prepare a steel sheet sample. The speed of temperature rise at the time of annealing was made 6.0°C/s up to 500°C and 2.0°C/s from 500°C to the holding temperature. The annealing was performed in a state applying a 5.0 MPa tension.

After the annealing, plating was performed to obtain a plated steel sheet. The plating was dipping in a 450°C hot dip galvanization bath (Zn-0.14%Al) for 3 seconds. After dipping, the steel sheet was pulled out at 100 mm/s and wiped by $N_2$ gas to control the amount of plating deposition to 50 g/m². After the plating, alloying was performed at 520°C for 30 seconds.

<Examples 2 to 28 and Comparative Examples 29 to 40>

Except for making each chemical composition the one described in Table 1, making the conditions of the pretreatment step and annealing step the ones described in Table 2, and making the plating type the one described in Table 3, the same procedure was followed as in Example 1 to produce a welded joint and evaluate the LME resistance at the time of production. Note that, in No. 36, the grit blasting was omitted. In No. 40, instead of grit blasting, surface treatment by grinding using brush rolls was performed.

In the plating types of Table 3, "a" indicates a Zn-0.14%Al hot dip galvannealing, "b" indicates Zn-0.14%Al hot dip galvanizing without alloying, and "c" indicates Zn-1.5%Al-1.5%Mg. Further, "no plating" indicates no plating applied.

[Table 1]

Table 1

| No. | Class | Chemical composition (mass%), balance: Fe and | | | | | | | impurities | | | |
|---|---|---|---|---|---|---|---|---|---|---|---|---|
| | | C | Si | Mn | sol. Al | P | S | N | B | Ti | Others | Si+sol.Al |
| 1 | Ex. | 0.08 | 0.8 | 2.0 | 0.7 | 0.0001 | 0.0005 | 0.0007 | - | - | - | 1.5 |
| 2 | Ex. | 0.08 | 1.4 | 2.0 | 0.0 | 0.0001 | 0.0002 | 0.0002 | 0.0004 | 0.0002 | - | 1.4 |
| 3 | Ex. | 0.10 | 0.9 | 2.0 | 0.8 | 0.0080 | 0.0006 | 0.0001 | 0.0002 | 0.0003 | Hf:0.001 | 1.7 |
| 4 | Ex. | 0.10 | 1.0 | 2.0 | 1.0 | 0.0080 | 0.0008 | 0.0002 | 0.0007 | 0.0008 | - | 2.0 |
| 5 | Ex. | 0.10 | 1.0 | 2.0 | 1.0 | 0.0070 | 0.0002 | 0.0005 | 0.0005 | 0.0003 | - | 2.0 |
| 6 | Ex. | 0.10 | 0.9 | 2.2 | 0.8 | 0.0020 | 0.0004 | 0.0002 | 0.0007 | 0.0003 | - | 1.7 |
| 7 | Ex. | 0.20 | 1.0 | 2.0 | 1.0 | 0.0100 | 0.0002 | 0.0008 | 0.0004 | 0.0008 | Mg:0.001 | 2.0 |
| 8 | Ex. | 0.20 | 1.0 | 2.0 | 1.0 | 0.0020 | 0.0009 | 0.0006 | 0.0010 | 0.0004 | Zr:0.015 | 2.0 |
| 9 | Ex. | 0.20 | 0.8 | 2.2 | 0.7 | 0.0008 | 0.0005 | 0.0004 | 0.0002 | 0.0001 | - | 1.5 |
| <u>10</u> | Ex. | 0.20 | 1.0 | 2.5 | 1.0 | 0.0017 | 0.0004 | 0.0008 | 0.0001 | 0.0003 | Cr:0.10 | 2.0 |
| 11 | Ex. | 0.20 | 0.9 | 2.3 | 0.9 | 0.0011 | 0.0010 | 0.0004 | 0.0007 | 0.0004 | Cu:0.0007 | 1.8 |
| 12 | Ex. | 0.20 | 1.0 | 2.3 | 1.0 | 0.0031 | 0.0003 | 0.0007 | 0.0009 | 0.0008 | - | 2.0 |
| 13 | Ex. | 0.20 | 1.0 | 2.2 | 1.0 | 0.0065 | 0.0009 | 0.0007 | 0.0009 | 0.0006 | Ni:0.08 | 2.0 |
| 14 | Ex. | 0.20 | 0.8 | 5.0 | 0.7 | 0.0090 | 0.0007 | 0.0008 | 0.0006 | 0.0006 | - | 1.5 |
| 15 | Ex. | 0.25 | 1.0 | 2.2 | 1.0 | 0.0012 | 0.0008 | 0.0008 | 0.0004 | 0.0009 | Nb:0.010 | 2.0 |
| 16 | Ex. | 0.25 | 1.0 | 2.2 | 1.0 | 0.0040 | 0.0001 | 0.0005 | 0.0005 | 0.0003 | V:0.009 | 2.0 |
| 17 | Ex. | 0.30 | 1.0 | 5.0 | 1.0 | 0.0099 | 0.0006 | 0.0004 | 0.0005 | 0.0002 | - | 2.0 |
| 18 | Ex. | 0.30 | 1.2 | 0.3 | 1.0 | 0.0110 | 0.0009 | 0.0006 | 0.0004 | 0.0006 | - | 2.2 |
| 19 | Ex. | 0.35 | 1.0 | 3.0 | 1.0 | 0.0092 | 0.0001 | 0.0007 | 0.0003 | 0.0006 | Mo:0.09 | 2.0 |
| 20 | Ex. | 0.35 | 1.0 | 2.2 | 1.0 | 0.0091 | 0.0004 | 0.0002 | 0.0008 | 0.0003 | REM:0.0008 | 2.0 |
| 21 | Ex. | 0.40 | 1.0 | 2.2 | 1.0 | 0.0045 | 0.0006 | 0.0007 | 0.0007 | 0.0002 | - | 2.0 |
| 22 | Ex. | 0.40 | 1.0 | 2.2 | 1.0 | 0.0035 | 0.0008 | 0.0004 | 0.0006 | 0.0009 | W:0.005 | 2.0 |
| 23 | Ex. | 0.40 | 1.0 | 2.2 | 1.0 | 0.0082 | 0.0008 | 0.0007 | 0.0002 | 0.0007 | - | 2.0 |
| 24 | Ex. | 0.40 | 1.0 | 2.2 | 1.0 | 0.0080 | 0.0003 | 0.0009 | 0.0005 | 0.0004 | Ca:0.0005 | 2.0 |
| 25 | Ex. | 0.10 | 0.9 | 2.2 | 0.8 | 0.0020 | 0.0004 | 0.0002 | 0.0007 | 0.0003 | - | 1.7 |
| 26 | Ex. | 0.18 | 0.9 | 2.0 | 0.8 | 0.0100 | 0.0002 | 0.0008 | 0.0004 | 0.0008 | Mg:0.001 | 1.7 |
| 27 | Ex. | 0.20 | 0.8 | 2.0 | 0.7 | 0.0020 | 0.0009 | 0.0006 | 0.0010 | 0.0004 | Zr:0.015 | 1.5 |
| 28 | Ex. | 0.20 | 0.8 | 2.2 | 0.7 | 0.0008 | 0.0005 | 0.0004 | 0.0002 | 0.0001 | - | 1.5 |
| 29 | Comp. ex. | <u>0.44</u> | 1.0 | 2.0 | 1.0 | 0.0100 | 0.0001 | 0.0002 | 0.0010 | 0.0006 | - | 2.0 |
| 30 | Comp. ex. | 0.20 | <u>0.3</u> | 2.0 | 1.0 | 0.0100 | 0.0002 | 0.0003 | 0.0009 | 0.0003 | - | 1.3 |
| 31 | Comp. ex. | 0.20 | <u>2.2</u> | 2.0 | 1.0 | 0.0100 | 0.0001 | 0.0006 | 0.0002 | 0.0009 | - | 3.2 |
| 32 | Comp. ex. | 0.20 | 1.0 | 2.0 | <u>2.1</u> | 0.0100 | 0.0005 | 0.0007 | 0.0003 | 0.0005 | - | 3.1 |

(continued)

| No. | Class | Chemical composition (mass%), balance: Fe and | | | | | | | impurities | | | |
| | | C | Si | Mn | sol. Al | P | S | N | B | Ti | Others | Si+sol.Al |
|---|---|---|---|---|---|---|---|---|---|---|---|---|
| 33 | Comp. ex. | 0.20 | 1.0 | 2.0 | 1.0 | 0.0100 | 0.0009 | 0.0003 | 0.0008 | 0.0006 | - | 2.0 |
| 34 | Comp. ex. | 0.08 | 1.0 | 2.0 | 1.0 | 0.0100 | 0.0004 | 0.0003 | 0.0010 | 0.0008 | - | 2.0 |
| 35 | Comp. ex. | 0.20 | 1.0 | 2.0 | 1.0 | 0.0100 | 0.0007 | 0.0002 | 0.0003 | 0.0004 | - | 2.0 |
| 36 | Comp. ex. | 0.20 | 1.0 | 2.0 | 1.0 | 0.0100 | 0.0007 | 0.0007 | 0.0001 | 0.0003 | - | 2.0 |
| 37 | Comp. ex. | 0.20 | 1.0 | 2.0 | 1.0 | 0.0100 | 0.0005 | 0.0005 | 0.0004 | 0.0002 | - | 2.0 |
| 38 | Comp. ex. | 0.20 | 1.0 | 2.0 | 1.0 | 0.0100 | 0.0005 | 0.0005 | 0.0004 | 0.0002 | - | 2.0 |
| 39 | Comp. ex. | 0.20 | 1.0 | 2.0 | 1.0 | 0.0100 | 0.0005 | 0.0005 | 0.0004 | 0.0002 | - | 2.0 |
| 40 | Comp. ex. | 0.20 | 1.0 | 2.0 | 1.0 | 0.0100 | 0.0005 | 0.0005 | 0.0004 | 0.0002 | - | 2.0 |

※ Underlines indicate outside scope of present invention.

[Table 2]

Table 2

| No. | Class | Pretreatment step | | Annealing step | | |
| | | Blasted amount (kg/m$^2$) | Surface roughness after pretreatment | Holding temp. (°C) | Holding time (s) | Dew point (°C) |
|---|---|---|---|---|---|---|
| 1 | Ex. | 5 | A | 800 | 40 | 0 |
| 2 | Ex. | 5 | A | 800 | 45 | 0 |
| 3 | Ex. | 15 | A | 800 | 60 | 0 |
| 4 | Ex. | 20 | A | 800 | 80 | 0 |
| 5 | Ex. | 50 | AA | 820 | 100 | 0 |
| 6 | Ex. | 100 | AA | 840 | 100 | 0 |
| 7 | Ex. | 100 | AA | 860 | 100 | 0 |
| 8 | Ex. | 100 | AA | 860 | 100 | 0 |
| 9 | Ex. | 100 | AA | 860 | 100 | 0 |
| 10 | Ex. | 100 | AA | 860 | 100 | 0 |
| 11 | Ex. | 100 | AA | 860 | 100 | 0 |
| 12 | Ex. | 20 | AA | 860 | 100 | 0 |
| 13 | Ex. | 100 | AA | 860 | 100 | 0 |
| 14 | Ex. | 400 | AA | 860 | 100 | 0 |
| 15 | Ex. | 100 | AA | 860 | 100 | 0 |
| 16 | Ex. | 100 | AA | 860 | 100 | 0 |
| 17 | Ex. | 300 | AA | 860 | 100 | 0 |

(continued)

| No. | Class | Pretreatment step | | Annealing step | | |
|---|---|---|---|---|---|---|
| | | Blasted amount (kg/m$^2$) | Surface roughness after pretreatment | Holding temp. (°C) | Holding time (s) | Dew point (°C) |
| 18 | Ex. | 100 | AA | 860 | 100 | 0 |
| 19 | Ex. | 100 | AA | 860 | 100 | 0 |
| 20 | Ex. | 100 | AA | 860 | 100 | 0 |
| 21 | Ex. | 100 | AA | 860 | 100 | 0 |
| 22 | Ex. | 100 | AA | 860 | 100 | -20 |
| 23 | Ex. | 100 | AA | 860 | 100 | 0 |
| 24 | Ex. | 100 | AA | 860 | 100 | 0 |
| 25 | Ex. | 50 | AA | 860 | 100 | 0 |
| 26 | Ex. | 50 | AA | 860 | 100 | 0 |
| 27 | Ex. | 100 | AA | 860 | 100 | 0 |
| 28 | Ex. | 100 | AA | 860 | 100 | 0 |
| 29 | Comp. ex. | 100 | A | 800 | 60 | 0 |
| 30 | Comp. ex. | 100 | A | 800 | 60 | 0 |
| 31 | Comp. ex. | 100 | A | 800 | 60 | 0 |
| 32 | Comp. ex. | 100 | A | 800 | 60 | 0 |
| 33 | Comp. ex. | 100 | A | <u>720</u> | 60 | 0 |
| 34 | Comp. ex. | 100 | A | <u>920</u> | 60 | 0 |
| 35 | Comp. ex. | 100 | A | 800 | <u>10</u> | 0 |
| 36 | Comp. ex. | <u>None</u> | B | 800 | 60 | 0 |
| 37 | Comp. ex. | <u>500000</u> | A | 800 | 60 | 0 |
| 38 | Comp. ex. | 15 | A | 800 | 60 | <u>-35</u> |
| 39 | Comp. ex. | 15 | A | 800 | 60 | <u>25</u> |
| 40 | Comp. ex. | <u>Grinding</u> | B | 800 | 60 | 0 |

※ Underlines indicate outside scope of preferable method of production

In the obtained steel sheets, the surface layer structure, roughness of the steel sheet surface or steel sheet/plating interface, tensile strength, and LME resistance were evaluated.

(Evaluation of Surface Layer Structure)

A sample cut to a 30 mm×30 mm plate shape was taken and measured by GDS five times in the sheet thickness direction to find the depth with a C concentration of 0.01% or less. This was shown as the "C≤0.01% depth" of Table 3.
Further, a sample cut to a 25 mm×15 mm plate shape was taken and etched by Nital. The C cross-section of the sample (sheet thickness cross-section parallel to rolling direction (L direction)) was examined under an SEM and the thickness of the low cementite layer was measured. This was shown as the "cementite 10% or less thickness" of Table 3. Here, the starting point of the "depth" was the surface of the steel sheet in a not plated steel sheet and was the interface of the steel sheet and plating layer in plated steel sheet. The interface of the steel sheet and plating layer was made a position where the concentration of Fe measured by GDS measurement became 93% of the concentration of the Fe at a depth of 150 μm.
Further, in not plated steel sheet, the surface of the steel sheet while in a plated steel sheet, the surface of the steel sheet with the plating removed using a 10 mass% hydrochloric acid solution to which 0.06 mass% of an inhibitor (ibit made by Asahi Chemical Co., Ltd.) was added so as to expose the surface of the steel sheet were measured for roughness by the same method as before annealing. This was shown by the "steel sheet surface or steel sheet/plating interface roughness" of Table 3.

(Evaluation of Tensile Strength)

In each steel sheet, a JIS No. 5 tensile test piece having a direction perpendicular to the rolling direction and sheet thickness direction as the long direction was taken. A tensile test was performed based on JIS Z 2241: 2011 to find the tensile strength. This was evaluated as follows:
Evaluation AAA: 1180 MPa or more
Evaluation AA: 980 MPa or more and less than 1180 MPa
Evaluation A: 780 MPa or more and less than 980 MPa
Evaluation B: less than 780 MPa

(Evaluation of LME Resistance)

Two samples cut from each steel sheet to 50 mm×100 mm size were taken. These two samples were spot welded using dome radius type tip diameter 8 mm welding electrodes by a weld angle of 2°, squeeze force of 4.0kN, weld time of 0.5 second, and weld current of 12 kA to prepare a welded joint. When producing a welded joint using "no plating" steel sheet in Table 3, the spot welded was performed by combination with the No. 1 steel sheet given the hot dip galvannealing. At that time, by spot welding steel sheets given plating including zinc in advance 10 times or more, the spot welding was performed using welding electrodes with zinc deposited on them so that the welding electrodes abutted against the "no plating" steel sheet.
Referring to FIG. 2, the method of evaluation of the LME resistance will be explained. The LME resistance was evaluated by overlaying two steel sheets 21 and spot welding them, then measuring the lengths of the cracking 23 formed right under electrodes and the LME cracking formed right outside the pressure contact zone of the welded parts 22 (cracking 24 right outside the pressure contact zone). "Right outside the pressure contact zone of the welded parts" means parts at the outside of the parts pressure contacted by spot welding at the overlaid surfaces of two steel sheets at positions near the pressure contact zone (range up to about 1 mm to the outside from an end face of a pressure welded part). The cracking right under electrodes and cracking right outside pressure contact zone were respectively evaluated by the lengths of the cracking. Note that, the tests by spot welding were performed three times. The longest lengths of the cracking at the cracking right under electrodes 23 and cracking 24 right outside pressure contact zone were evaluated. The evaluation criteria were as follows. In the examples, Evaluation A or more (that is, Evaluations A, AA, AAA) were judged excellent in LME resistance.
Evaluation AAA: 0 $\mu$m (no cracking)
Evaluation AA: more than 0 $\mu$m and less than 60 $\mu$m
Evaluation A: 60 $\mu$m or more and less than 120 $\mu$m
Evaluation B: 120 $\mu$m or more

(Evaluation of Hydrogen Embrittlement Resistance)

Two samples cut from each steel sheet to 550 mm×100 mm size were taken. One sample (Sample A) was electrochemically charged with hydrogen, while the other sample (Sample B) was allowed to stand at room temperature (25°C, relative humidity 30%) for 12 hours. These samples were measured for the amount of diffusible hydrogen in the steel by the thermal desorption. Specifically, the test pieces were heated in a heating furnace provided with gas chromatography to 400°C. The sum of the amounts of hydrogen released until falling to 250°C was made the amount of diffusible hydrogen.
The hydrogen embrittlement resistance (amount of hydrogen stored in sample) was calculated by (amount of diffusible hydrogen of Sample B)/(amount of diffusible hydrogen of Sample A) (%) and evaluated by the following criteria.
Evaluation AAA: less than 5%

Evaluation AA: 5% or more and less than 10%

Evaluation A: 10% or more and less than 30%

Evaluation B: 30% or more

The results of the evaluation are shown in Table 3.
[Table 3]

Table 3

| No. | Class | Steel surface layer structure | | Steel sheet surface or steel sheet/plating interface surface roughness Ra (μm) | Plating type | Performance | | | |
|---|---|---|---|---|---|---|---|---|---|
| | | C≤0.01% depth (μm) | Cementite 10% or less thickness (μm) | | | Tensile strength (MPa) | LME resistance | | Hydrogen embrittlement resistance |
| | | | | | | | Right under electrode | Right outside pressure welded part | |
| 1 | Ex. | 3 | 8 | 3.6 | A | A | A | A | A |
| 2 | Ex. | 3 | 8 | 3.7 | No plating | A | A | A | A |
| 3 | Ex. | 4 | 10 | 3.5 | b | AA | A | AA | A |
| 4 | Ex. | 5 | 12 | 3.4 | b | A | AA | AA | AA |
| 5 | Ex. | 9 | 13 | 4.0 | b | AA | AAA | AAA | AAA |
| 6 | Ex. | 16 | 20 | 4.2 | b | AA | AAA | AAA | AAA |
| 7 | Ex. | 24 | 24 | 4.3 | b | AA | AAA | AAA | AAA |
| 8 | Ex. | 21 | 21 | 4.4 | b | AA | AAA | AAA | AAA |
| 9 | Ex. | 23 | 23 | 4.6 | c | AA | AAA | AAA | AAA |
| 10 | Ex. | 20 | 22 | 4.2 | b | AA | AAA | AAA | AAA |
| 11 | Ex. | 22 | 24 | 4.1 | b | AA | AAA | AAA | AAA |
| 12 | Ex. | 19 | 21 | 3.3 | b | AA | AA | AAA | AA |
| 13 | Ex. | 17 | 20 | 4.5 | b | AA | AAA | AAA | AAA |
| 14 | Ex. | 34 | 28 | 4.6 | b | AAA | AAA | AAA | AAA |
| 15 | Ex. | 18 | 20 | 4.4 | b | AAA | AAA | AAA | AAA |
| 16 | Ex. | 16 | 18 | 4.3 | b | AAA | AAA | AAA | AAA |
| 17 | Ex. | 30 | 26 | 4.1 | b | AAA | AAA | AAA | AAA |
| 18 | Ex. | 19 | 21 | 4.6 | b | AA | AAA | AAA | AAA |
| 19 | Ex. | 18 | 20 | 4.5 | b | AAA | AAA | AAA | AAA |
| 20 | Ex. | 20 | 21 | 4.5 | b | AAA | AAA | AAA | AAA |
| 21 | Ex. | 15 | 18 | 4.6 | b | AAA | AAA | AAA | AAA |
| 22 | Ex. | 17 | 19 | 4.1 | b | AAA | AAA | AAA | AAA |
| 23 | Ex. | 19 | 21 | 4.8 | c | AAA | AAA | AAA | AAA |
| 24 | Ex. | 18 | 20 | 4.3 | b | AAA | AAA | AAA | AAA |
| 25 | Ex. | 16 | 20 | 4.2 | b | AA | AAA | AAA | AAA |
| 26 | Ex. | 21 | 23 | 4.5 | b | AA | AAA | AAA | AAA |
| 27 | Ex. | 21 | 22 | 4.4 | b | AA | AAA | AAA | AAA |
| 28 | Ex. | 22 | 23 | 4.6 | c | AA | AAA | AAA | AAA |
| 29 | Comp. ex. | _2_ | _4_ | _2.6_ | b | AAA | _B_ | _B_ | _B_ |

(continued)

| No. | Class | Steel surface layer structure | | Steel sheet surface or steel sheet/plating interface surface roughness Ra (μm) | Plating type | Performance | | | |
|---|---|---|---|---|---|---|---|---|---|
| | | C≤0.01% depth (μm) | Cementite 10% or less thickness (μm) | | | Tensile strength (MPa) | LME resistance | | Hydrogen embrittlement resistance |
| | | | | | | | Right under electrode | Right outside pressure welded part | |
| 30 | Comp. ex. | <u>2</u> | <u>3</u> | <u>2.6</u> | b | AAA | <u>B</u> | <u>B</u> | <u>B</u> |
| 31 | Comp. ex. | <u>2</u> | <u>3</u> | 2.3 | b | AAA | <u>B</u> | <u>B</u> | <u>B</u> |
| 32 | Comp. ex. | 3 | <u>3</u> | <u>2.5</u> | b | AAA | <u>B</u> | <u>B</u> | B |
| 33 | Comp. ex. | 3 | <u>2</u> | <u>2.6</u> | b | AAA | <u>B</u> | <u>B</u> | B |
| 34 | Comp. ex. | <u>2</u> | <u>6</u> | <u>2.6</u> | b | AAA | <u>B</u> | <u>B</u> | <u>B</u> |
| 35 | Comp. ex. | <u>2</u> | <u>4</u> | <u>22</u> | b | AAA | <u>B</u> | <u>B</u> | <u>B</u> |
| 36 | Comp. ex. | <u>2</u> | <u>4</u> | <u>2.7</u> | b | AAA | <u>B</u> | <u>B</u> | <u>B</u> |
| 37 | Comp. ex. | 44 | 82 | <u>2.5</u> | b | <u>B</u> | <u>B</u> | <u>B</u> | <u>B</u> |
| 38 | Comp. ex. | <u>2</u> | <u>3</u> | <u>2.6</u> | b | AAA | <u>B</u> | <u>B</u> | <u>B</u> |
| 39 | Comp. ex. | <u>2</u> | <u>2</u> | <u>2.6</u> | b | AAA | <u>B</u> | <u>B</u> | <u>B</u> |
| 40 | Comp. ex. | <u>2</u> | <u>4</u> | <u>2.7</u> | b | AAA | <u>B</u> | <u>B</u> | <u>B</u> |
| Underlines indicate outside scope of present invention or desired properties not obtained. | | | | | | | | | |

No. 29 is a comparative example with a large content of C of the steel sheet. Since the content of C of the steel sheet is large, even if performing high dew point annealing, it is believed that the C concentration at the surface layer of the steel sheet did not fall. Therefore, the depth where the C concentration was 0.01% or less and the thickness of the layer with a cementite area ratio of 10% or less were small. Further, the roughness of the steel sheet/plating interface was small. As a result, the steel sheet was inferior in LME resistance and hydrogen embrittlement resistance.

No. 30 is a comparative example with a small content of Si of the steel sheet. Since the content of Si of the steel sheet was small, even if performing high dew point annealing, it is believed decarburization at the surface layer did not progress. Therefore, the depth where the C concentration was 0.01% or less and the thickness of the layer with a cementite area ratio of 10% or less were small. Further, the roughness of the steel sheet surface was small. As a result, the steel sheet was inferior in LME resistance and hydrogen embrittlement resistance.

No. 31 is a comparative example with a large content of Si of the steel sheet. Since the content of Si of the steel sheet was large, even if performing high dew point annealing, it is believed external oxidation proceeded and oxides (scale) were formed at the surface layer of the steel sheet and decarburization at the surface-most part was suppressed. Therefore, the depth where the C concentration was 0.01% or less and the thickness of the layer with a cementite area ratio of 10% or less were small. Further, the roughness of the steel sheet/plating interface was small. As a result, the steel sheet was inferior in LME resistance and hydrogen embrittlement resistance.

No. 32 is a comparative example with a large content of sol. Al of the steel sheet. Since the content of sol. Al of the steel sheet was large, even if performing high dew point annealing, it is believed external oxidation proceeded and oxides (scale) were formed at the surface layer of the steel sheet and decarburization at the surface-most part was suppressed. Therefore, the thickness of the layer with a cementite area ratio of 10% or less was small. Further, the roughness of the steel sheet/plating interface was small. As a result, the steel sheet was inferior in LME resistance and hydrogen embrittlement resistance.

No. 33 was low in holding temperature at the time of annealing, therefore it is believed decarburization was not sufficiently promoted at the time of annealing. For this reason, the thickness of the layer with a cementite area ratio of 10% or less was small. Further, the roughness of the steel sheet/plating interface was small. As a result, the steel sheet was inferior in LME resistance and hydrogen embrittlement resistance.

No. 34 was high in holding temperature at the time of annealing, therefore it is believed decarburization was not sufficiently promoted at the time of annealing. Therefore, the depth where the C concentration was 0.01% or less and the thickness of the layer with a cementite area ratio of 10% or less were small. Further, the roughness of the steel sheet/plating interface was small. As a result, the steel sheet was inferior in LME resistance and hydrogen embrittlement resistance.

No. 35 was short in holding time at the time of annealing, therefore decarburization was not sufficiently promoted at the time of annealing. Therefore, the depth where the C concentration was 0.01% or less and the thickness of the layer with a cementite area ratio of 10% or less were small. Further, the roughness of the steel sheet/plating interface was small. As a result, the steel sheet was inferior in LME resistance and hydrogen embrittlement resistance.

No. 36 is a comparative example where grit blasting was not performed in the pretreatment step. Since grit blasting was not performed, it is believed strain was not introduced to the surface of the steel sheet and decarburization did not proceed at the time of annealing. Therefore, the depth where the C concentration was 0.01% or less and the thickness of the layer with a cementite area ratio of 10% or less were small. Further, the roughness of the steel sheet/plating interface was small. As a result, the steel sheet was inferior in LME resistance and hydrogen embrittlement resistance.

No. 37 is a comparative example with a large amount of blasting at the grit blasting. As a result, the roughness of the steel sheet/plating interface was small. Further, it is believed that decarburization proceeded too much and the tensile strength of the steel sheet fell. Further, the steel sheet was inferior in LME resistance and hydrogen embrittlement resistance.

No. 38 was low in dew point at the time of annealing, therefore it is believed that the outside part of the steel sheet was formed with a layer including oxides of Si, Mn, Al, etc. and decarburization did not proceed. Therefore, the depth where the C concentration was 0.01% or less and the thickness of the layer with a cementite area ratio of 10% or less were small. Further, the roughness of the steel sheet/plating interface was small. As a result, the steel sheet was inferior in LME resistance and hydrogen embrittlement resistance.

No. 39 was high in dew point at the time of annealing, therefore it is believed that the outside part of the steel sheet was formed with a layer including oxides of Si, Mn, Al, etc. and decarburization was not promoted. Therefore, the depth where the C concentration was 0.01% or less and the thickness of the layer with a cementite area ratio of 10% or less were small. Further, the roughness of the steel sheet/plating interface was small. As a result, the steel sheet was inferior in LME resistance and hydrogen embrittlement resistance.

No. 40 is a comparative example where, instead of grit blasting, surface treatment was performed by grinding using brush rolls. With grinding by grinding brushes, it is believed sufficient strain was not introduced into the surface of the steel sheet and decarburization at the time of annealing did not proceed. Therefore, the depth where the C concentration was 0.01% or less and the thickness of the layer with a cementite area ratio of 10% or less were small. Further, the roughness of the steel sheet/plating interface was small. As a result, the steel sheet was inferior in LME resistance and hydrogen embrittlement resistance.

Nos. 1 to 28 are examples of the present invention and had high LME resistance and hydrogen embrittlement resistance. It was confirmed that the steel sheets of examples with a large depth where the C concentration was 0.01% or less and with a large thickness of the layer with a cementite area ratio of 10% or less had particularly excellent LME resistance.

[INDUSTRIAL APPLICABILITY]

According to the present invention, high strength steel sheet and plated steel sheet having high LME resistance and hydrogen embrittlement resistance can be provided. The steel sheet and plated steel sheet can be suitably used for automobiles, household electric appliances, building materials, and other applications, in particular for automobiles. Therefore, the present invention is an invention with extremely high industrial applicability.

REFERENCE SIGNS LIST

11 low cementite layer

12 hard structures
13 plating layer
14 ferrite
15 cementite
21 steel sheet
22 welded part
23 cracking right under electrodes
24 cracking right outside pressure contact zone

**Claims**

1. A steel sheet having a tensile strength of 780 MPa or more, wherein the chemical composition of the steel sheet comprises, by mass%,

C: 0.08 to 0.40%,
Si: 0.4 to 2.0%,
Mn: 0.1 to 5.0%,
sol. Al: 0 to 2.0%,
P: 0.0300% or less,
S: 0.0300% or less,
N: 0.0100% or less,
B: 0 to 0.0100%,
Ti: 0 to 0.1500%,
Nb: 0 to 0.150%,
V: 0 to 0.150%,
Cr: 0 to 2.00%,
Ni: 0 to 2.00%,
Cu: 0 to 2.0000%,
Mo: 0 to 1.00%,
W: 0 to 1.000%,
Ca: 0 to 0.1000%,
Mg: 0 to 0.100%,
Zr: 0 to 0.100%,
Hf: 0 to 0.100%,
REM: 0 to 0.1000% and
a balance of Fe and impurities,
a depth in a depth direction from the steel sheet surface, wherein a C concentration measured by GDS is 0.01% or less, is 3 $\mu$m or more,
a thickness in a depth direction from the steel sheet surface, of the layer with an area ratio of cementite of 10% or less, is 8 $\mu$m or more, and
a surface roughness of the steel sheet in arithmetic average roughness Ra is more than 3.0 $\mu$m.

2. The steel sheet according to claim 1, wherein a total value of contents of Si and sol. Al is less than 1.8%.

3. The steel sheet according to claim 1, wherein the depth in the depth direction from the steel sheet surface, wherein the C concentration measured by GDS is 0.01% or less, is 5 $\mu$m or more.

4. The steel sheet according to claim 1, wherein the depth in the depth direction from the steel sheet surface, wherein the C concentration measured by GDS is 0.01% or less, is 7 $\mu$m or more.

5. The steel sheet according to claim 1, wherein a surface roughness of the steel sheet in arithmetic average roughness Ra is 4.0 $\mu$m or more.

6. A plated steel sheet comprising a plating layer containing Zn on at least a part of the surface of the steel sheet according to any one of claims 1 to 5.

Fig. 1

Fig. 2

**EP 4 650 477 A1**

<table>
<tr><td colspan="2" style="text-align:center"><strong>INTERNATIONAL SEARCH REPORT</strong></td><td colspan="2">International application No.<br><strong>PCT/JP2024/000591</strong></td></tr>
</table>

**A.    CLASSIFICATION OF SUBJECT MATTER**

*C22C 38/00*(2006.01)i; *C21D 9/46*(2006.01)i; *C22C 38/58*(2006.01)i; *C22C 18/00*(2006.01)n; *C22C 18/04*(2006.01)n
FI:    C22C38/00 301S; C22C38/00 301T; C22C38/58; C21D9/46 G; C22C18/04; C22C18/00; C21D9/46 J

According to International Patent Classification (IPC) or to both national classification and IPC

**B.    FIELDS SEARCHED**

Minimum documentation searched (classification system followed by classification symbols)

C22C38/00-38/60; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2017-2384 A (NIPPON STEEL & SUMITOMO METAL CORPORATION) 05 January 2017 (2017-01-05)<br>entire text | 1-6 |
| A | WO 2021/200580 A1 (JFE STEEL CORPORATION) 07 October 2021 (2021-10-07)<br>entire text | 1-6 |
| A | WO 2021/200579 A1 (JFE STEEL CORPORATION) 07 October 2021 (2021-10-07)<br>entire text | 1-6 |
| A | WO 2022/239071 A1 (NIPPON STEEL CORPORATION) 17 November 2022 (2022-11-17)<br>entire text | 1-6 |
| A | WO 2022/210396 A1 (NIPPON STEEL CORPORATION) 06 October 2022 (2022-10-06)<br>entire text | 1-6 |
| A | WO 2020/136989 A1 (JFE STEEL CORPORATION) 02 July 2020 (2020-07-02)<br>entire text | 1-6 |

☑ Further documents are listed in the continuation of Box C.      ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **06 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

22

**INTERNATIONAL SEARCH REPORT**

International application No.

**PCT/JP2024/000591**

### C. DOCUMENTS CONSIDERED TO BE RELEVANT

| Category* | Citation of document, with indication, where appropriate, of the relevant passages | Relevant to claim No. |
|---|---|---|
| A | WO 2020/136988 A1 (JFE STEEL CORPORATION) 02 July 2020 (2020-07-02) <br> entire text | 1-6 |
| A | JP 2010-43323 A (SUMITOMO METAL INDUSTRIES, LTD.) 25 February 2010 (2010-02-25) <br> entire text | 1-6 |
| A | JP 2019-178405 A (JFE STEEL CORPORATION) 17 October 2019 (2019-10-17) <br> 0005 | 1-6 |
| A | WO 2020/129337 A1 (JFE STEEL CORPORATION) 25 June 2020 (2020-06-25) <br> 0014 | 1-6 |
| A | JP paragraphs [2002]-[3948] A (SONY CORPORATION) 09 January 2002 (2002-01-09) <br> 0012 | 1-6 |

Form PCT/ISA/210 (second sheet) (July 2022)

## INTERNATIONAL SEARCH REPORT
### Information on patent family members

International application No.

**PCT/JP2024/000591**

| Patent document cited in search report | | | Publication date (day/month/year) | Patent family member(s) | | | Publication date (day/month/year) |
|---|---|---|---|---|---|---|---|
| JP | 2017-2384 | A | 05 January 2017 | (Family: none) | | | |
| WO | 2021/200580 | A1 | 07 October 2021 | US | 2023/0151451 | A1 | |
| | | | | entire text | | | |
| | | | | EP | 4130324 | A1 | |
| | | | | KR | 10-2022-0145391 | A | |
| | | | | CN | 115362279 | A | |
| WO | 2021/200579 | A1 | 07 October 2021 | US | 2023/0129828 | A1 | |
| | | | | entire text | | | |
| | | | | EP | 4130323 | A1 | |
| | | | | KR | 10-2022-0145390 | A | |
| | | | | CN | 115349028 | A | |
| WO | 2022/239071 | A1 | 17 November 2022 | CN | 117280068 | A | |
| | | | | entire text | | | |
| | | | | KR | 10-2023-0165834 | A | |
| WO | 2022/210396 | A1 | 06 October 2022 | EP | 4296396 | A1 | |
| | | | | entire text | | | |
| | | | | KR | 10-2023-0148847 | A | |
| | | | | CN | 117098867 | A | |
| WO | 2020/136989 | A1 | 02 July 2020 | US | 2022/0098687 | A1 | |
| | | | | entire text | | | |
| | | | | EP | 3904553 | A1 | |
| | | | | CN | 113227429 | A | |
| | | | | KR | 10-2021-0094620 | A | |
| WO | 2020/136988 | A1 | 02 July 2020 | US | 2022/0074013 | A1 | |
| | | | | entire text | | | |
| | | | | EP | 3904552 | A1 | |
| | | | | CN | 113227428 | A | |
| | | | | KR | 10-2021-0095189 | A | |
| JP | 2010-43323 | A | 25 February 2010 | (Family: none) | | | |
| JP | 2019-178405 | A | 17 October 2019 | (Family: none) | | | |
| WO | 2020/129337 | A1 | 25 June 2020 | US | 2021/0310091 | A1 | |
| | | | | 0015 | | | |
| | | | | EP | 3901301 | A1 | |
| | | | | CN | 113227423 | A | |
| | | | | KR | 10-2021-0091282 | A | |
| JP | 2002-3948 | A | 09 January 2002 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019116531 A

- WO 2020218575 A

**Non-patent literature cited in the description**

- **FUMIHIKO HASEGAWA** ; **JUNICHI ARAI** ; **TSUNE-SHICHI TANAKA**. Correlation Between Static Strength Parameters. *Materials*, vol. 39 (442), 859-863